# EUROPÄISCHE PATENTANMELDUNG

(11) **EP 0 564 857 A1**
(43) Veröffentlichungstag der Anmeldung: **13.10.1993**
(21) Anmeldenummer: 93104329.3
(22) Anmeldetag: 17.03.1993
(51) Int. Cl.: C05G 1/00, C05D 3/02, C05F 7/00

(54) **Kultursubstrat mit Düngewert in körniger, rieselfähiger Form und Verfahren zu seiner Herstellung**

(30) Priorität: 03.04.1992 DE 4211185
(71) Anmelder: MAYKO ENTSORGUNGSBETRIEBE GmbH, D-56626 Andernach (DE)
(72) Erfinder: Schafhausen,Otto U., W-5000 Köln 50 (DE)
(74) Vertreter: Bauer, Wulf, Dr.

(57) **Zusammenfassung**

Das Kultursubstrat mit Düngewert und in körniger, rieselfähiger Form, besteht aus a) 1 bis 2 Teilen Klärschlamm, b) einem Teil Kalk, vorzugsweise in Form von kalkhaltigem Rückstandsschlamm aus der Wasseraufbereitung von Kraftwerken und c) 1 bis 2 Teilen Lavasand, Angaben jeweils bezogen auf feuchte Ausgangsstoffe.

## Beschreibung

Die Erfindung bezieht sich auf ein Kultursubstrat mit Düngewert und in körniger, rieselfähiger Form sowie auf ein Verfahren zu seiner Herstellung.

Die bei der kommunalen Abwasserreinigung anfallenden Klärschlämme werden nach eventueller Aufbereitung, beispielsweise anaerober oder aerober Klärschlammstabilisierung, deponiert oder weiterverwendet. Da Deponierraum zunehmend knapper und eine Deponierung zunehmend teurer wird, ist eine möglichst weitgehende stoffliche Verwertung anzustreben. Im Bereich der Landwirtschaft wird ein erheblicher Anteil von Klärschlämmen verwertet, indem die Klärschlämme auf Felder und dergleichen aufgebracht werden. Derzeit wird jedoch der größte Anteil des in der Bundesrepublik anfallenden Klärschlamms deponiert, insbesondere der aus Kläranlagen von größeren Städten und Industrieregionen stammende Klärschlamm.

Klärschlamm enthält Nährstoffe und organische Bestandteile, die bei einer Deponierung ungenutzt verloren gehen. Bei einem Einsatz in der Landwirtschaft werden die im Klärschlamm enthaltenen Nährstoffe und organischen Bestandteile in den natürlichen Kreislauf zurückgeführt. Ein möglichst großer Anteil der Weiterverwertung von Klärschlamm ist daher anzustreben.

Die Klärschlammverordnung (AbfKlärV) regelt die landwirtschaftliche Verwertung von Klärschlämmen. Sie schreibt insbesondere Grenzwerte für sieben Schwermetalle, persistente organische Schadstoffe und adsorbierbare, organisch gebundene Halogene vor. Weiterhin ist es angebracht, den Klärschlamm auf seine seuchenhygienische Unbedenklichkeit zu überprüfen.

Ein Aufbringen des Klärschlamms von der Kläranlage unmittelbar auf Felder wird unter anderem dadurch erschwert, daß der Klärschlamm nur in geringem Umfang lagerfähig ist, eine erhebliche Geruchsbelästigung mit sich bringt und ein Ausbringen auf die Felder mit erheblichen praktischen Schwierigkeiten verbunden ist. Grundvoraussetzung für eine Rückführung in den natürlichen Kreislauf ist die ökologische Unbedenklichkeit des Klärschlamms. Eine landwirtschaftliche Verwertung ist ohne eine vorgeschaltete Analyse nicht unbedenklich, auch dies steht einer unmittelbaren Nutzung des an einem Klärwerk anfallenden Schlamms entgegen.

Hiervon ausgehend hat sich die Erfindung die Aufgabe gestellt, ein Klärschlamm enthaltendes Kultursubstrat und ein Verfahren zu seiner Herstellung anzugeben, bei dem das Klärschlamm enthaltende Kultursubstrat in körniger, rieselförmiger Form vorliegt, also streufähig ist; lagerstabil ist, also auch über Monate mit einfachen Mitteln gelagert werden kann und schließlich weitgehend geruchsneutral vorliegt.

Gelöst wird diese Aufgabe durch ein Kultursubstrat mit den Merkmalen des Anspruchs 1, sowie ein Verfahren mit den Merkmalen des Anspruchs 8.

Unter dem Begriff Kultursubstrat wird ein Stoff verstanden, der allgemein als Bodenersatz verwendbar ist, beispielsweise auf Felder aufgebracht werden kann, der zum Zweck der Rekultivierung von Steinbrüchen, Deponien einsetzbar ist, mit dem Hohlräume verfüllt werden können und der als Bodenhilfsstoff einsetzbar ist. Durch den Gehalt an organischen Substanzen wird die Bodenstruktur verbessert und damit die Wasserdurchlässigkeit vermindert und die Wasserspeicherfähigkeit erhöht. Zusätzlich wird durch die organischen Stoffe des Klärschlamms das Bodenleben aktiviert und es werden organisch gebundene Nährstoffe eingebracht. Aufgrund des Kalkanteils besteht darüberhinaus die Möglichkeit, die Bodenreaktion zu erhöhen und die Plastizität bindiger Böden zu vermindern.

Das erfindungsgemäße Kultursubstrat liegt in gekrümelter und geruchsfreier Form vor und entspricht dadurch den Anforderungen der DIN 18915. Es ist gut lagerfähig und kann mit einfachen Mitteln, insbesondere mit vorhandenen Maschinen, auf landwirtschaftlich genutzte Flächen ausgebracht werden, z. B. mittels eines Tellerstreuers. Dabei läßt sich problemlos eine homogene Verteilung erreichen.

Der Lavasand stammt aus Steinbrüchen, in denen Lava gewonnen wird, Analysen liegen vor für das Material aus dem Steinbruch bei Nickenich. Lavasand ist ein Abfallprodukt bei der Gewinnung von Lava im Steinbruch. Als natürliches, vulkanisches Produkt ist Lavasand ein Lieferant von Spurenelementen wie z. B. Bor, Eisen und Mangan. Ferner sind Bestandteile zur Verbesserung der Bodenfruchtbarkeit wie Tonminerale, Aluminiumoxid und Kieselsäure im Sand enthalten. Geogen bedingt hat Lavasand einen Nickelgehalt von etwa 27 % des Grenzwertes der AbfKlärV, ansonsten liegen seine Bestandteile weit unter den Grenzwerten dieser Verordnung. Durch die Beimischung von Lavasand in das erfindungsgemäße Kultursubstrat wird der normalerweise nicht weiterverwertete Lavasand einem sinnvollen, ökologisch wertvollen Einsatz zugeführt. Das Körnungsband des eingesetzten Lavasandes liegt vorzugsweise zwischen 0 und 4, vorzugsweise 3 mm.

Als Kalkanteil wird bei dem erfindungsgemäßen Kultursubstrat vorzugsweise der kalkhaltige Rückstandsschlamm aus der Wasseraufbereitung von Kraftwerken eingesetzt, wie er beispielsweise bei der Aufbereitung von Kühlturm-Zusatzwasser anfällt. Der Kalkgehalt (als Fällungsmittel) im Rückstandsschlamm liegt bei etwa 50 % der Trockenmasse. Praktische Ergebnisse liegen vor mit Rückstandsschlamm, wie er beim Kraftwerk Mühlheim-Kärlich anfällt. Der Rückstandsschlamm ist pulverig-feinstkörnig und weitestgehend frei von schädlichen Inhaltsstoffen.

Ein wesentlicher Vorteil der Erfindung liegt somit darin, drei im wesentlichen als Abfallprodukte anfallende Bestandteile so gemeinsam aufbereitet zu haben, daß ein in weiten Bereichen einsetzbares Kultursubstrat erhalten wird, welches die bereits angesprochenen guten Eigenschaften einer einfachen Lagerfähigkeit, eines einfachen Ausbringens auf die Felder und guten Dosierbarkeit bei geringer Geruchsbelästigung aufweist. Durch die einfache Lagerfähigkeit wird ein Problem umgangen, das ansonsten bei der landwirtschaftlichen Verwertung von Klärschlämmen stets ansteht. Klärschlämme fallen - mit jahreszeitlicher Schwankung der Zusammensetzung - über das gesamte Jahr an, ein landwirtschaftlicher Einsatz ist jedoch nur zu bestimmten Zeitpunkten im Jahr möglich, nämlich im Frühjahr oder Herbst. Bei einem direkten Ausbringen von Klärschlamm auf Felder besteht das Problem, die Klärschlämme zwischenlagern zu müssen, wenn sie zu einer Zeit anfallen, in denen sie nicht auf Felder aufgebracht werden können. Bei dem erfindungsgemäßen Kultursubstrat ist eine Lagerung auch über Monate mit einfachen Mitteln möglich, die Lagerung wird auch dadurch vereinfacht, daß das Kultursubstrat weitgehend geruchsneutral ist. Bei der Lagerung muß im wesentlichen nur darauf geachtet werden, daß Spritzwasser, beispielsweise Regen, keinen direkten Zugang zu dem Substrat hat. Ansonsten sind keine weiteren Lagervorschriften zu beachten. Im Gegensatz zu Klärschlamm ist die Lagerung also deutlich vereinfacht.

In Weiterbildung der Erfindung wird der Klärschlamm vor der Zubereitung des Kultursubstrats, also vor der Vermischung mit den beiden anderen Bestandteilen, auf seinen Gehalt an Schwermetallen, persistenten, organischen Schadstoffen und adsorbierbaren organisch gebundenen Halogenen analysiert. Weitere Schadstoffüberprüfungen können hinzugezogen werden. Es hat sich herausgestellt, daß bei kommunalen Klärschlämmen aus ländlichen Regionen keine erhebliche Schadstoffbelastung vorliegt.

Darüberhinaus wird zweckmäßig geprüft, ob der Klärschlamm oder das fertige Kultursubstrat seuchenhygienisch unbedenklich sind. Bei Erprobungen hat es sich gezeigt, daß einzelne Klärschlämme von Zeit zu Zeit belastet sind, beispielsweise durch Salmonellen. Durch die Zugabe von Kalk in Form von Kalk selbst oder vorzugsweise dem Rückstandsschlamm ist jedoch die Gefahr einer Verseuchung des Kultursubstrates praktisch gebannt.

Das erfindungsgemäße Kultursubstrat hat einen Düngewert. Dies wird durch Nährstoffgehalte des Klärschlamms begründet. Die Stickstoff- und Phosphatwerte im Kultursubstrat sind eher als niedrig einzustufen, die Kalzium- und Magnesiumwerte liegen dagegen im Bereich mittel bis hoch. Konkret kann mit dem erfindungsgemäßen Kultursubstrat und unter Berücksichtigung der zulässigen Ausbringungsmenge (5 t Klärschlamm/ha/3 a) und eines Klärschlammanteils von etwa 50 % im Durchschnitt mit folgenden jährlichen Nährstofffrachten gerechnet werden: Gesamt-Stickstoff etwa 24 kg/ha, Gesamt-Phosphat etwa 36 kg/ha, Kalk etwa 580 kg/ha, Kali 114 kg/ha und Magnesium 79 kg/ha. Für eine Volldüngung ist dies im allgemeinen nicht ausreichend. In Weiterbildung der Erfindung wird vorgeschlagen, dem erfindungsgemäßen Kultursubstrat die erforderlichen Nährstoffe hinzuzufügen, die für einen speziellen Einsatz, beispielsweise Anbau von Weizen oder Silomais in einer Vegationsphase, benötigt werden. Dies hat den Vorteil, daß mit dem Ausbringen des Kultursubstrats gleichzeitig und im selben Arbeitsgang die erforderliche Düngung in Anpassung an die gewünschte Feldfrucht oder dergleichen erfolgt. Auf diese Weise werden Arbeitsgänge eingespart.

Bei der Herstellung eines Volldüngers wird das aus dem Klärschlamm stammende Phosphat und Kalium als voll pflanzenverfügbar angerechnet, da es in Wasser- oder Kohlensäure löslicher Form vorliegt. Der Stickstoff liegt normalerweise in organisch gebundener Form vor und ist nur zu rund 30 % sofort pflanzenverfügbar. Der Rest wird durch die Bodenlebewesen mineralisiert und ist in dem nächsten und übernächsten Jahr pflanzenverfügbar. Kalzium wirkt bodenverbessernd und hebt den pH-Wert des Bodens an. Der Eintrag von Kalk durch das Kultursubstrat ist daher bei entsprechenden Böden eine sinnvolle Maßnahme.

Nach einer Analyse der in einer fertigen Kultursubstratmischung enthaltenen Nährstoffe werden diese auf die erforderlichen Nährstoffgaben in einer Vegetationsphase für eine konkrete Feldfrucht ergänzt.

Bei Verwendung des Kultursubstrats für die Rekultivierung von Tagebaumaßnahmen (Kiesgruben, Steinbrüchen u. ä.) oder bei Wiederherrichtung und Begrünung von Deponien und Abraumhalden hat es sich gezeigt, daß im Vergleich zu einem natürlichen Boden eine starke Nährstoffüberversorgung im Kultursubstrat vorliegt. Im Vergleich zu natürlichem Boden hat das Kultursubstrat auch keine bodentypischen Organismen, welche eine natürliche Umsetzung der organischen Anteile im Klärschlamm bewirken. Das Bodenleben stellt sich aber mit der Zeit ein. Erste Überprüfungen haben gezeigt, daß das Kultursubstrat in Folge der sich einstellenden Fauna und Flora mit der Zeit mehr und mehr einem natürlichen Boden angeglichen wird. Damit eignet sich das Kultursubstrat auch als Bodenersatz bei Rekultivierungsmaßnahmen.

Als vorteilhaft hat es sich herausgestellt, nach dem Mischvorgang das Kultursubstrat noch eine zeitlang, vorzugsweise mindestens zwei Wochen, ausgasen zu lassen, bevor es landwirtschaftlich verwertet wird, also auf Felder ausgebracht wird.

Der kalkhaltige Rückstandsschlamm hat vorzugsweise einen Wassergehalt von 50 bis 80, insbesondere 60 %. Der Klärschlamm wird durch geeignete Maßnahmen, z. B. Behandlung in Filterpressen, so weit eingedickt, daß sein Feststoffanteil zwischen 20 und 40 %, vorzugsweise zwischen 25 und 30 % liegt. Die drei Bestandteile des Kultursubstrats werden dosiert, beispielsweise aus einem Kastenbeschicker entnommen und in einer Mischvorrichtung intensiv miteinander gemischt, als Mischvorrichtungen kommen beispielsweise Flugscharmischer oder Doppelwelllenpaddelmischer in betracht. Die Dosierung kann volumetrisch oder auch gravimetrisch erfolgen. Der Klärschlamm kann unmittelbar nach Erhalt von der Kläranlage weiterverarbeitet werden. Das erhaltene Kultursubstrat ist körnig, das Größtkorn liegt bei 7, vorzugsweise bei 5 mm.

Vorteilhafterweise werden Klärschlämme unterschiedlicher Kläranlagen nach zuvor erfolgter Analyse für das erfindungsgemäße Kultursubstrat verarbeitet. Eine Vermischung von Klärschlämmen unterschiedlicher Kläranlagen vor der Vermischung mit den anderen beiden Bestandteilen oder eine Zugabe von unterschiedlichen Klärschlämmen aus verschiedenen Vorratsbehältern während der Mischung hat sich als vorteilhaft herausgestellt. Das Mischen selbst kann chargenweise oder kontinuierlich erfolgen.

Drei Beispiele für das erfindungsgemäße Kultursubstrat werden im folgenden im einzelnen besprochen, sie sind nicht einschränkend zu verstehend.

### 1. Beispiel:

50 Gewichtsprozent Klärschlamm aus der Kläranlage Mayen der Stadt Mayen wurden vermischt mit 25 Gewichtsprozent Lavasand aus dem Steinbruch Nickenich, Körnungsband 0 bis 4 mm, und mit 25 Gewichtsprozent Rückstandsschlamm aus der Brauchwasseraufbereitung des Kraftwerks Mühlheim-Kärlich, 25 % Feststoffanteil. Der Trockensubstanzgehalt der Gesamtmischung liegt bei 75 %. Die Bestandteile wurden in einem Flugscharmischer in einer Charge von 25 kg vermischt. Folgende Sieblinie wurde für das fertiggemischte Kultursubstrat erhalten:

| Siebweite (mm) | Durchgang in % |
|---|---|
| 8 | 100 |
| 4 | 99,88 |
| 2 | 99,28 |
| 1 | 86,88 |
| 0,5 | 73,72 |
| 0,25 | 64,44 |
| 0,125 | 54,68 |
| 0,063 | 48,60 |
| < 0,063 | 0,36 |

Alle Gewichtsangaben beziehen sich auf feuchte Ausgangsstoffe.

### 2. Beispiel:

20 kg Klärschlamm aus der Kläranlage VG Weißenthurm mit einem Feststoffgehalt von 20 % wurden vermischt mit 20 kg Rückstandsschlamm (wie im Beispiel 1) und 10 kg Lavasand aus dem Steinbruch Nickenich, Körnungsband 0 bis 3 mm. Das erhaltene Kultursubstrat hat einen Trockensubstanzgehalt von etwa 67 %. Folgende Sieblinie wurde ermittelt:

| Siebweite (mm) | Durchgang in % |
|---|---|
| 8 | 100 |
| 4 | 99,92 |
| 2 | 92,20 |
| 1 | 81,68 |
| 0,5 | 73,48 |
| 0,25 | 65,20 |
| 0,125 | 56,60 |
| 0,063 | 50,68 |
| < 0,063 | 0,16 |

### 3. Beispiel:

Es wurden dieselben Ausgangssubstanzen wie im 2. Beispiel verwendet, jedoch im Gewichtsverhältnis 1 : 1 : 1. Nach Mischung hatte das Kultursubstrat einen Trockensubstanzgehalt von 73,5 %, es wurde folgende Sieblinie ermittelt:

| Siebweite (mm) | Durchgang in % |
|---|---|
| 8 | 100 |
| 4 | 99,68 |
| 2 | 98,72 |
| 1 | 79,52 |
| 0,5 | 63,60 |
| 0,25 | 54,88 |
| 0,125 | 46,52 |
| 0,063 | 40,36 |
| < 0,063 | 0,08 |

## Patentansprüche

1. Kultursubstrat mit Düngewert und in körniger, rieselfähiger Form, bestehend aus a) 1 bis 2 Teilen Klärschlamm, b) einem Teil Kalk, vorzugsweise in Form von kalkhaltigem Rückstandsschlamm aus der Wasseraufbereitung von Kraftwerken und c) 1 bis 2 Teilen Lavasand, Angaben jeweils bezogen auf feuchte Ausgangsstoffe.

2. Kultursubstrat nach Anspruch 1, dadurch gekennzeichnet, daß der Feststoffanteil des eingesetzten Klärschlamms mindestens 20, vorzugsweise mindestens 25 % beträgt.

3. Kultursubstrat nach Anspruch 1 oder 2, dadurch gekennzeichnet, daß bei Verwendung von kalkhaltigem Rückstandsschlamm der Feststoffgehalt mindestens 20, vorzugsweise mindestens 25 % beträgt

4. Kultursubstrat nach einem der Ansprüche 1 bis 3, dadurch gekennzeichnet, daß das Größtkorn bei 7, vorzugsweise bei 5 mm und insbesondere bei 3 mm liegt.

5. Kultursubstrat nach einem der Ansprüche 1 bis 4, dadurch gekennzeichnet, daß als Kalk zumindest teilweise Branntkalk verwendet ist.

6. Kultursubstrat nach einem der Ansprüche 1 bis 5, dadurch gekennzeichnet, daß das Kultursubstrat Bestandteil eines Vollwertdüngers ist, wobei das im Kultursubstrat vorliegende Nährstoffangebot ermittelt und durch Zugaben von N, P₂O₅, K₂O und MgO zu einem Vollwertdünger ergänzt wird.

7. Kultursubstrat nach einem der Ansprüche 1 bis 6, dadurch gekennzeichnet, daß nach seiner Herstellung und vor dem Ausbringen auf Felder eine Zeit zum Ausgasen von mindestens zwei Wochen eingehalten wird.

8. Verfahren zur Herstellung eines Kultursubstrats mit Düngewert in körniger, rieselfähiger Form, das lagerfähig und weitgehend geruchsneutral ist, bei welchem Verfahren 1 bis 2 Teile Klärschlamm, 1 Teil Kalk, vorzugsweise in Form von kalkhaltigem Rückstandsschlamm aus der Wasseraufbereitung von Kraftwerken und 1 bis 2 Teile Lavasand miteinander vermischt werden, alle Angaben bezogen auf feuchte Ausgangsstoffe und Gewichts- oder Volumenprozent.

9. Verfahren nach Anspruch 8, dadurch gekennzeichnet, daß der Klärschlamm vor der Zubereitung auf seinen Gehalt an Schwermetallen, an persistenten organischen Schadstoffen und adsorbierbaren organisch gebundenen Halogenen analysiert wird.

10. Verfahren nach Anspruch 8 oder 9, dadurch gekennzeichnet, daß der Klärschlamm oder das Kultursubstrat auf seuchenhygienische Unbedenklichkeit geprüft wird.

11. Verfahren nach Anspruch 8 bis 10, dadurch gekennzeichnet, daß eine Nährstoffanalyse des Kultursubstrats durchgeführt wird.

12. Verfahren nach Anspruch 8 bis 11, dadurch gekennzeichnet, daß die drei Bestandteile aus jeweils aus einem Kastenbeschicker auf einen Zwangsmischer, insbesondere Flugscharmischer, gegeben werden.
